# EUROPEAN PATENT APPLICATION

(11) **EP 4 733 851 A1**
(43) Date of publication of application: **29.04.2026**
(21) Application number: 25193657.1
(22) Date of filing: 04.08.2025
(51) Int. Cl.: G03G 21/16, H04N 1/00

(54) **IMAGE FORMING APPARATUS**

(30) Priority: 06.08.2024 JP 2024130009
(71) Applicant: Canon Kabushiki Kaisha, Tokyo, 146-8501 (JP)
(72) Inventor: TSUKADA, Masaru, Tokyo, 146-8501 (JP); MATSUDA, Kenji, Tokyo, 146-8501 (JP)
(74) Representative: TBK

(57) **Abstract**

An image forming apparatus (101) includes an image forming unit (11) configured to form an image on a recording material. A cover (40) is movable between a first position in which the cover covers an upper portion of the image forming unit and a second position in which the cover opens the upper portion of the image forming unit. A document reading unit (30) is provided above the image forming unit and above the cover and that is moveable independently of the cover. A leg (341; 342) that is positioned above the cover and below the document reading unit, and that is moveable together with the document reading unit. A first hinge (33) rotatably supports the document reading unit and the leg in relation to the image forming unit. An operation member (513) is operated when a person moves the cover from the first position to the second position.

## Description

### TECHNICAL FIELD

The present disclosure relates to an image forming apparatus.

### TECHNICAL FIELD

According to Japanese Patent Laid-Open No. 2006-065188, an image forming apparatus in which a document reading unit is arranged above an image forming unit has been proposed. A recording material discharge unit is provided between the image forming unit and the document reading unit. The document reading unit and the image forming unit are connected to each other via a hinge. By moving the document reading unit, the user can easily take out the recording material from the discharge unit.

### SUMMARY

According to Japanese Patent Laid-Open No. 2006-065188, the user can access the inside of the image forming unit by opening an upper door (cover) of the image forming unit. This makes it easier for the user to replace consumables or remove a jammed recording material. When the cover is opened, the image forming apparatus temporarily stops an image forming operation.

In the image forming apparatus of Japanese Patent Laid-Open No. 2006-065188, the cover of the image forming unit may be inadvertently opened when attempting to open the document reading unit. There are cases where, even though the user has opened the document reading unit in an attempt to take out a recording material from the discharge unit, the image forming apparatus stops image formation.

The present disclosure in its first aspect provides an image forming apparatus as specified in claim 1. Optional features are specified in claim 2 to 20. The present disclosure in its second aspect provides an image forming apparatus as specified in claim 21. The present disclosure in its third aspect provides an image forming apparatus as specified in claim 22. The present disclosure in its fourth aspect provides an image forming apparatus as specified in claim 23.

Features of the present disclosure will become apparent from the following description of embodiments with reference to the attached drawings. The following description of embodiments are described by way of example.

### BRIEF DESCRIPTION OF THE DRAWINGS

The accompanying drawings, which are incorporated in and constitute a part of the specification, illustrate embodiments of the present disclosure, and together with the description, serve to explain the principles of the embodiments.
FIG. 1 is a schematic cross-sectional view illustrating an image forming apparatus.
FIGS. 2A to 2C are perspective views illustrating the image forming apparatus.
FIGS. 3A and 3B are views illustrating a locking mechanism and a lock releasing mechanism.
FIGS. 4A and 4B are views for explaining a pop-up mechanism.
FIGS. 5A to 5C are diagrams for explaining positioning of an upper door.
FIGS. 6A and 6B are views illustrating a region where an operation member is arranged.
FIG. 7 is a view illustrating a controller.
FIGS. 8A to 8C are views for explaining the image forming apparatus according to a second embodiment.
FIGS. 9A to 9C are views illustrating a region where the operation member is arranged.
FIGS. 10A and 10B are views for explaining the image forming apparatus according to a third embodiment.
FIG. 11 is a view for explaining the operation member and structures in the periphery thereof.
FIGS. 12A and 12B are views illustrating a region where marks are arranged.
FIG. 13 is a view illustrating marks of a platen.

### DESCRIPTION OF THE EMBODIMENTS

Hereinafter, various exemplary embodiments, features, and aspects will be described in detail with reference to the attached drawings. Note, the following embodiments are not intended to limit the scope of the claims. Multiple features are described in the embodiments, but it is not the case that all such features are required, and multiple such features may be combined as appropriate. Furthermore, in the attached drawings, the same reference numerals are given to the same or similar configurations, and redundant description thereof is omitted.

### First Embodiment

### 1. Overview of the image forming apparatus

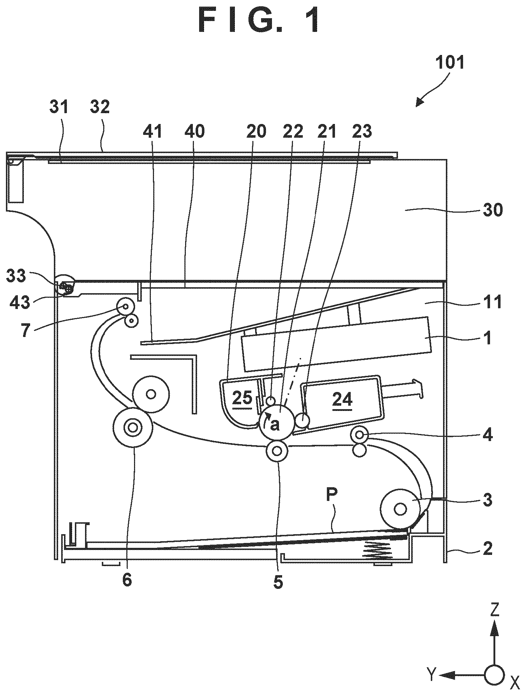

According to FIG. 1, the depth direction of an image forming apparatus 101 is defined as the Y direction. The width direction of the image forming apparatus 101 is defined as the X direction. The height direction of the image forming apparatus 101 is defined as the Z direction.

The image forming apparatus 101 is a copying machine including an image forming unit 11 and a document reading unit 30. The image forming unit 11 includes a cartridge 20 that is detachable from the image forming unit 11, and forms an image on a recording material P using the cartridge 20. The document reading unit 30 is provided above the image forming unit 11, and reads a document to generate image data or an image signal. The image forming unit 11 forms an image corresponding to image data or an image signal received from the document reading unit 30 on the recording material P. The recording material P may be referred to as a recording medium or a sheet.

The image forming unit 11 includes a laser scanner 1, a cassette 2, a feed roller 3, a conveyance roller 4, a transfer roller 5, a fixing device 6, and a discharge roller 7. The cartridge 20 includes a photosensitive drum 21, a charging roller 22, a developing roller 23, a toner container 24, and a toner collection unit 25.

The photosensitive drum 21 is rotationally driven in a direction indicated by an arrow a by a motor (not illustrated). The charging roller 22 charges the surface of the rotating photosensitive drum 21. The laser scanner 1 irradiates the photosensitive drum 21 with a laser beam in accordance with image data or an image signal to thereby form an electrostatic latent image. The developing roller 23 develops the electrostatic latent image using toner supplied from the toner container 24 to thereby form a toner image.

The cassette 2 is a storage box for storing one or more recording materials P. The feed roller 3 conveys one sheet of recording material P from the cassette 2 to the conveyance path. The conveyance roller 4 conveys the recording material P to the transfer roller 5. The transfer roller 5 transfers a toner image from the photosensitive drum 21 to the recording material P. The toner remaining on the surface of the photosensitive drum 21 without being transferred to the surface of the recording material P is collected by the toner collection unit 25.

The recording material P onto which the toner image has been transferred is conveyed to the fixing device 6. The fixing device 6 heats and pressurizes the recording material P and the toner image, and fixes the toner image to the recording material P. The discharge roller 7 discharges the recording material P to a discharge tray 41.

An upper door 40 is an openable/closable cover that forms the upper surface of the image forming unit 11. The discharge tray 41 is formed in a part of the upper door 40. The upper door 40 is rotatably supported by the image forming unit 11 via a hinge 43. That is, the upper door 40 rotates about the rotation axis of the hinge 43.

The document reading unit 30 includes a platen glass 31 and a pressing plate 32. The pressing plate 32 presses a document that has been placed on the platen glass 31 against the platen glass 31. The document reading unit 30 includes an illumination light source, a mirror, a lens, and an image sensor, and reads a document to generate image data or an image signal.

The document reading unit 30 is rotatably supported with respect to the image forming unit 11 via a hinge 33. That is, the document reading unit 30 rotates about the rotation axis of the hinge 33.

### 2. Opening and closing the upper door

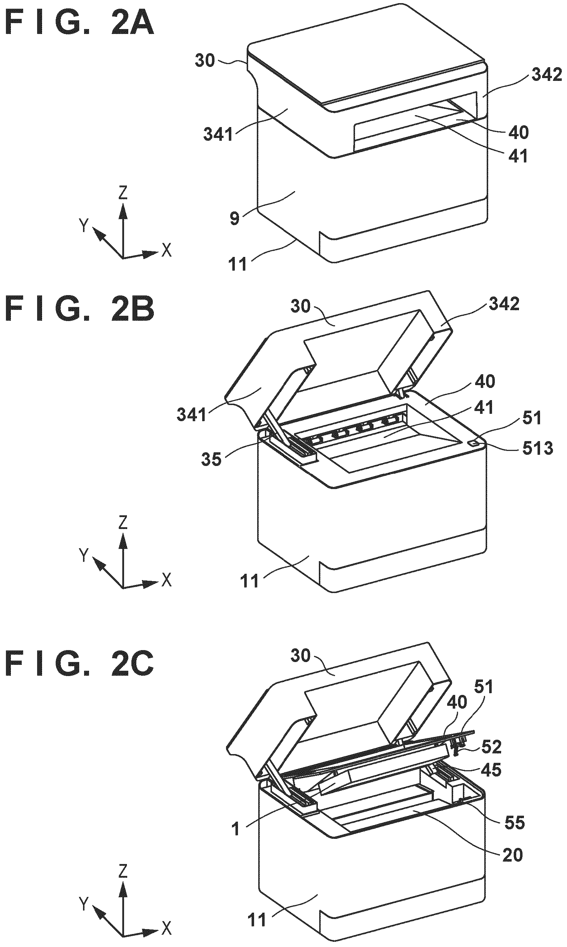

FIG. 2A illustrates a state in which the document reading unit 30 has been closed (closed state). The image forming unit 11 comprises a housing 9. FIG. 2B illustrates a state in which the document reading unit 30 has been opened (open state). In FIG. 2B, the upper door 40 is kept in a closed state. FIG. 2C illustrates a state in which the document reading unit 30 and the upper door 40 have been opened.

As illustrated in FIG. 2A, in a state in which the document reading unit 30 has been closed, the upper door 40 is in a first position. That is, the upper door 40 covers the upper portion of the image forming unit 11, which has the housing 9 as an exterior. The document reading unit 30 includes a leg 341 and a leg 342. The document reading unit 30 is supported on the upper door 40 via the leg 341 and the leg 342. The discharge tray 41 is provided between the leg 341 and the leg 342. The leg 341 and the leg 342 are not so high. Therefore, it is not easy for the user to insert their hand through the opening provided on the front side of the image forming apparatus 101 toward the back of the discharge tray 41.

As illustrated in FIG. 2B, in a state where the document reading unit 30 has been opened, a hinge arm 35 of the document reading unit 30 supports the document reading unit 30. The upper door 40 maintains a first position in which the upper portion of the image forming unit 11 is closed. As a result, an opening for the user to access a recording material P stacked on the discharge tray 41 becomes large, and the user can easily take out the recording material P. For example, the user can easily take out a small-size recording material P from the discharge tray 41.

As illustrated in FIG. 2B, an operation member 513 of a lock releasing button 51 is provided on the upper surface of the upper door 40. As illustrated in FIG. 2A, in a state where the document reading unit 30 has been closed, the operation member 513 is hidden by the leg 342. As illustrated in FIG. 2B, in a state where the document reading unit 30 has been opened, the operation member 513 is exposed.

As illustrated in FIG. 2C, in a state where the upper door 40 has been opened, and the upper door 40 has been moved to a second position where the upper portion of the image forming unit 11 is open. A hinge arm 45 of the upper door 40 serves as a holding member or holding rod for holding the upper door 40 in the open state. By opening the upper door 40, the user can easily replace the cartridge 20 which is incorporated in the image forming unit 11. The recording material P may stay inside the image forming unit 11 (jam). By opening the upper door 40, the user can easily remove the jammed recording material P.

### 3. Locking mechanism for the upper door

As illustrated in FIG. 2C, the upper door 40 has the lock releasing button 51 and a lock releasing link 52. The lock releasing button 51 and the lock releasing link 52 are connected via a joint to form a link mechanism. The image forming unit 11 includes a lock member 54 and a pop-up member 55. The upper door 40 is fixed to the image forming unit 11 by locking the distal end of the lock releasing link 52 to the lock member 54. When the lock releasing link 52 is moved to the unlocked position by the lock releasing button 51, the pop-up member 55 pushes the upper door 40 upward. As a result, the user can easily hook a finger on the outer edge of the upper door 40 and lift up the upper door 40.

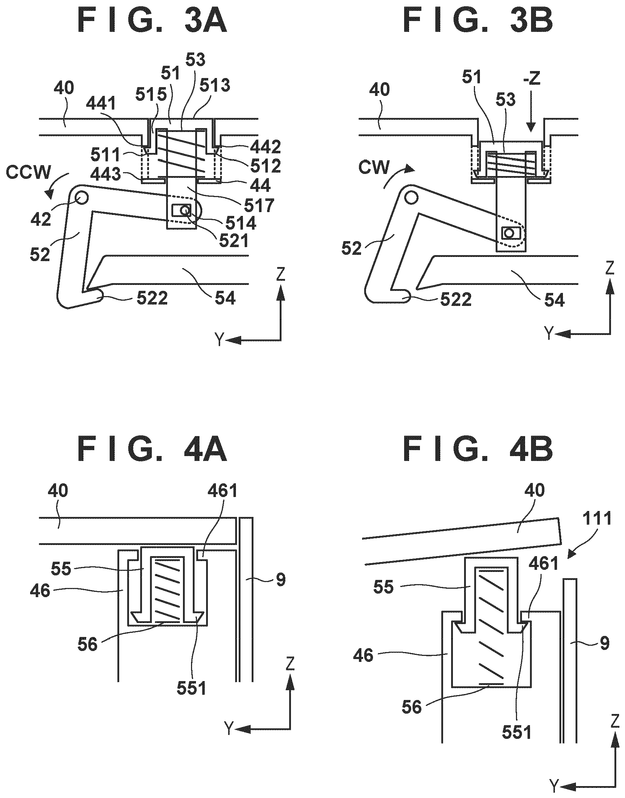

FIG. 3A illustrates a state in which the upper door 40 is locked (fixed) to the image forming unit 11. FIG. 3B illustrates a state in which the lock of the upper door 40 to the image forming unit 11 is released. As illustrated in FIG. 3A, the lock releasing button 51 has side surfaces 515 and 516 extending downward from the operation member 513. A tab 511 is formed in the vicinity of a lower portion of the side surface 515. A tab 512 is formed in the vicinity of a lower portion of the side surface 516. The upper door 40 has a holder 44 for accommodating an upper portion of the lock releasing button 51. The holder 44 has a groove 441 and a groove 442. The tab 511 can move up and down inside the groove 441. The tab 512 can move up and down inside the groove 442.

The lock releasing button 51 has a rod-shaped member 517. A lock spring 53 is inserted through the rod-shaped member 517. One end of the lock spring 53 is in contact with the lower surface of the operation member 513. One end of the lock spring 53 is in contact with the bottom surface of the holder 44. The lock releasing button 51 is biased in the Z direction by a biasing force of the lock spring 53. When the tab 511 and the tab 512 abut against the groove 441 and the groove 442, respectively, the operation member 513 is kept at a predetermined position. In this state, the height of the operation member 513 is substantially the same as the height of the upper door 40.

The bottom surface of the holder 44 has an opening through which the rod-shaped member 517 is inserted. An engagement hole 514 is provided in a lower portion of the rod-shaped member 517 extending downward from the center of the lock releasing button 51. The engagement hole 514 engages with an engagement pin 521 provided in the lock releasing link 52. The lock releasing link 52 is rotatably held by a rotation shaft 42 provided in the upper door 40. When the lock releasing button 51 moves in the Z-direction, the lock releasing link 52 rotates counterclockwise (CCW). The lock member 54 provided in the image forming unit 11 is engaged by a locking tab 522. The locking tab 522 is provided at a distal end of the lock releasing link 52. When the locking tab 522 engages with the lock member 54 from below, the upper door 40 is restricted from moving upward. Accordingly, the upper door 40 is locked to the image forming unit 11.

As FIG. 3B illustrates, when the lock releasing button 51 is pushed in the -Z direction, the lock releasing link 52 rotates in a clockwise direction (CW). As a result, the locking tab 522 is separated from the lock member 54, and the lock the upper door 40 is released.

### 4. Pop-up mechanism

FIG. 4A illustrates a state in which the upper door 40 is locked to the image forming unit 11. FIG. 4B illustrates a state in which the lock of the upper door 40 is released and the upper door 40 is popped up. As illustrated in FIG. 4A and FIG. 4B, the image forming unit 11 includes the pop-up member 55, a holder 46, and a pop-up spring 56. The pop-up member 55 is accommodated in the holder 46, and can move within the internal space of the holder 46. An engaging tab 551 for holding the pop-up member 55 in the holder 46 may be provided at a lower portion of the pop-up member 55. The engaging tab 551 of the pop-up member 55 engages with an engaging tab 461 provided in the holder 46. The pop-up member 55 is biased upward by the pop-up spring 56.

The lower surface of the upper door 40 comes into contact with the pop-up member 55 in the process of rotating the upper door 40 downward. When the upper door 40 is further rotated downward, the pop-up member 55 moves downward while opposing the biasing force of the pop-up spring 56.

As illustrated in FIG. 4B, when the lock of the upper door 40 is released, the pop-up member 55 pushes the upper door 40 up by the biasing force of the pop-up spring 56. Accordingly, a space 111 for inserting a finger is secured between the bottom surface of the upper door 40 and the housing 9 of the image forming unit 11. As a result, the user can easily hook a finger on the lower surface of the upper door 40 and lift the upper door 40.

### 5. Rotation positions of the upper door and the document reading unit

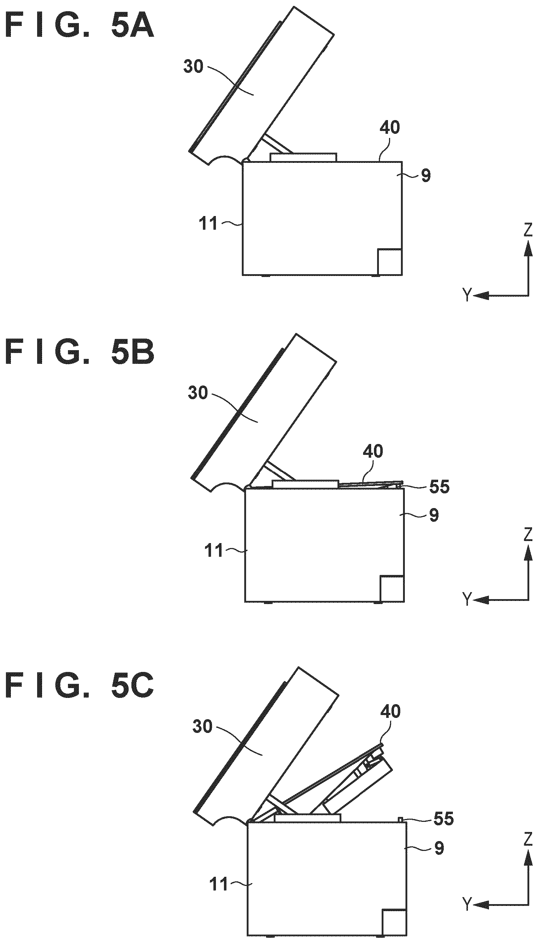

FIG. 5A illustrates a state in which the upper door 40 is closed. FIG. 5B illustrates a state in which the upper door 40 is popped up. FIG. 5C illustrates a state in which the upper door 40 has been opened.

The state in which the upper door 40 has been closed illustrated in FIG. 5A corresponds to the state illustrated in FIG. 2B. The document reading unit 30 and the legs 341 and 342 are in an open position. The upper door 40 is in the first position. As illustrated in FIG. 5A, the majority of the upper door 40 is hidden by the housing 9 of the image forming unit 11 and cannot be seen. The upper door 40 is locked to the image forming unit 11 as illustrated in FIG. 3A.

In a case where the document reading unit 30 and the legs 341 and 342 are in the open position as illustrated in FIG. 2B, the user can see the operation member 513 of the lock releasing button 51 provided on the upper door 40. As illustrated in FIG. 3B, when the user presses the operation member 513, the lock of the upper door 40 is released. As illustrated in FIG. 4B, the pop-up member 55 pushes up the upper door 40. As illustrated in FIG. 5B, the upper door 40 moves from the first position (closed position) to a third position (intermediate position). The user opens the upper door 40 with a finger on the edge of the upper door 40.

As illustrated in FIG. 5C, when the upper door 40 rotates further upward, the upper door 40 moves from the third position to the second position (open position). Here, the third position is between the first position in which the upper portion of the image forming unit 11 has been closed and the second position in which the upper portion of the image forming unit 11 is open. An angle θ1 formed by the upper door 40 with the horizontal plane when the upper door 40 is in the first position is approximately 0 degrees. An angle θ3 is formed by the upper door 40 with the horizontal plane when the upper door 40 is in the third position. An angle θ2 formed by the upper door 40 with the horizontal plane when the upper door 40 is in the second position. Here, θ3 is greater than θ1. θ2 is greater than θ3.

When the user manually holds the upper door 40 and moves the upper door 40 downward, the upper door 40 returns from the second position to the third position. By the user moving the upper door 40 further downward, the upper door 40 returns from the third position to the first position. Then, the upper door 40 is locked.

### 6. Regions where the lock releasing button can be arranged

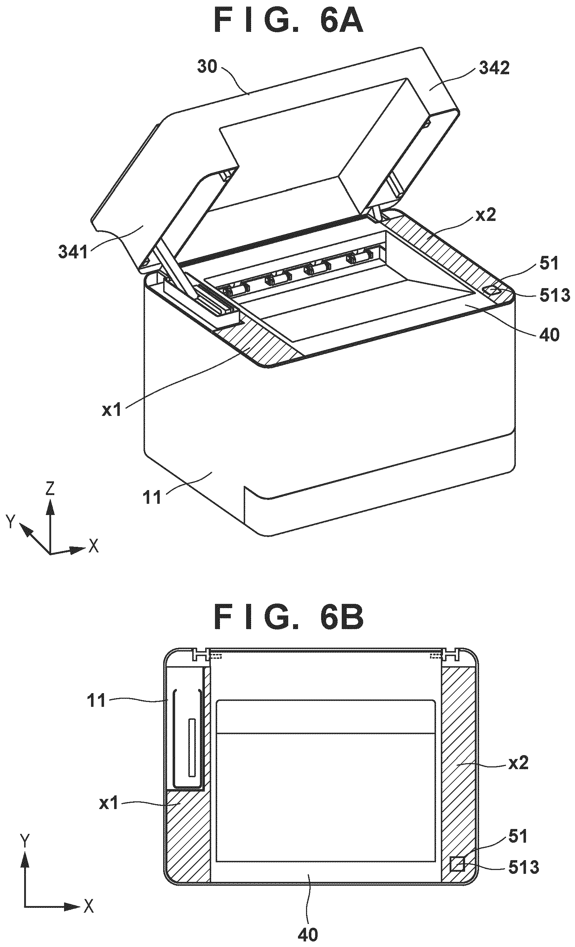

FIG. 6A is a perspective view of the image forming apparatus 101 in a state in which the upper door 40 is closed. FIG. 6B is a plan view in which an upper surface of the upper door 40 is viewed from above. The operation member 513 of the lock releasing button 51 is arranged in either a region x1 or a region x2 to which hatched lines have been added. When the document reading unit 30 is supported on the upper door 40 via the leg 341 and the leg 342, the region x1 is hidden by the leg 341. Similarly, the region x2 is hidden by the leg 342. As described above, since the leg 341 or the leg 342 hides the operation member 513 of the lock releasing button 51, it will likely be difficult for the user to erroneously operate the lock releasing button 51.

### 7. Controller

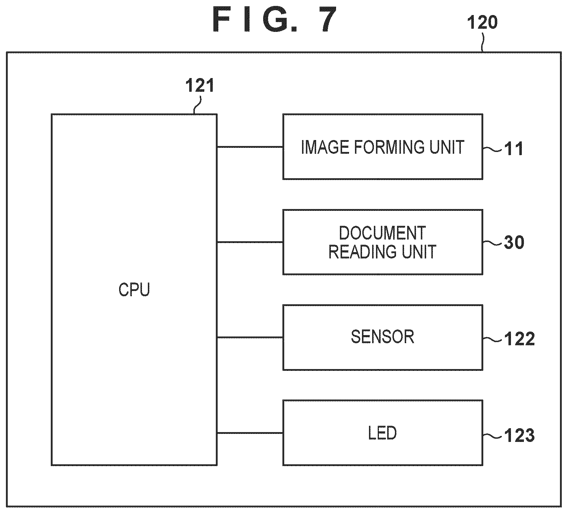

FIG. 7 illustrates a controller 120 of the image forming apparatus 101. The controller 120 includes a CPU 121, a sensor 122, and an LED 123. The CPU 121 controls the image forming unit 11 and the document reading unit 30 in accordance with a control program. The sensor 122 detects whether the upper door 40 is open or closed. The LED 123 is controlled to be on, blinking, and off by the CPU 121. "LED" is an abbreviation for light-emitting diode, and is an example of a light-emitting device and a light source.

The CPU 121 monitors the state of the upper door 40 using the sensor 122 while the image forming unit 11 forms an image. When the upper door 40 is opened, the CPU 121 causes the image forming unit 11 to stop image formation. As a result, the safety of the image forming unit 11 can be improved.

By virtue of the first embodiment, the opening of the upper door 40 due to the erroneous operation will be reduced. As a result, the stoppage of image formation due to an erroneous operation will be reduced. Recording materials P and toner will likely be less wastefully consumed.

According to the first embodiment, the operation member 513 of the lock releasing button 51 is hidden by the leg 342 of the document reading unit 30, but this is merely an example. In order to prevent erroneous operation of the operation member 513, the operation member 513 may be visually or tactilely inconspicuous. For example, the color of the operation member 513 and a color in the vicinity of the operation member 513 in the upper door 40 may be the same or similar colors (example: the same color system). Similarly, a surface property (surface processing) of the operation member 513 and a surface property of the vicinity of the operation member 513 in the upper door 40 may be the same or similar.

The LED 123 may be provided on the operation member 513 of the lock releasing button 51. The CPU 121 may turn on or blink the LED 123 when it is desired to prompt the user to replace or perform jam processing on the cartridge 20. The CPU 121 turns off the LED 123 during image formation. Accordingly, the operation member 513 of the lock releasing button 51 may be visually hidden.

According to the first embodiment, the upper door 40 is an example of a cover that is movable between a first position in which it covers the upper portion of the image forming unit 11 and a second position in which it opens the upper portion of the image forming unit 11. The document reading unit 30 is an example of a document reading unit that is provided above the image forming unit 11 and above the upper door 40 and is movable independently of the upper door 40. The legs 341 and 342 are positioned above the upper door 40 and below the document reading unit 30, and are examples of legs that are movable together with the document reading unit 30. The hinge 33 is an example of a first hinge that rotatably supports the document reading unit 30 and the legs 341 and 342 with respect to the image forming unit 11. The operation member 513 is an example of an operation member that is operated when a person moves the upper door 40 from the first position to the second position. In a state in which the upper door 40 is in the first position and the upper door 40 is supporting the legs 341 and 342, the leg 342 hides the operation member 513. There is a state in which the upper door 40 is in the first position, and the document reading unit 30 and the legs 341 and 342 are rotated and the upper door 40 does not support the legs 341 and 342. In this state, the legs 341 and 342 expose the operation member 513. As a result, erroneous operation of the upper door 40 by the user will likely be suppressed.

The lock releasing link 52 and the lock member 54 serve as a fixing mechanism for fixing the upper door 40 to the image forming unit 11. The lock releasing button 51 serves as a release mechanism for releasing the fixing by the fixing mechanism when it is operated by a person. There is a state in which the upper door 40 is in the first position, and the document reading unit 30 is supported by the upper door 40 via the leg 342. The position where the operation member 513 is provided is a position where the operation member 513 is hidden by the leg 342. There is a state in which the upper door 40 is in the first position, and the document reading unit 30 and the leg 342 rotate upwards via the hinge 33. The position where the operation member 513 is provided is a position where the hiding of the operation member 513 by the leg 342 is cancelled.

There are cases where the lock releasing button 51 releases the fixing of the upper door 40 to the image forming unit 11 by the lock member 54. The pop-up member 55 is an example of a movement mechanism that moves the upper door 40 to a third position between the first position and the second position. As a result, the user may be able to easily lift the upper door 40.

The pop-up spring 56 is an example of a biasing member that biases the upper door 40 upward. The biasing member may include an elastic body (e.g., spring, rubber, resin).

The hinge 43 is an example of a second hinge that rotatably supports the upper door 40 with respect to the image forming unit 11. As a result, it becomes easier for the user to open the upper door 40.

An exposure light source (e.g., the laser scanner 1, an LED) that irradiates the photosensitive drum 21 with light to form an electrostatic latent image on the photosensitive drum 21 may be fixed below the upper door 40. As a result, it may be possible to omit a structure for holding the exposure light source.

The sensor 122 is an example of a sensor that detects opening of the upper door 40. The CPU 121 is an example of controller that controls the image forming unit 11. When the sensor 122 detects the opening of the upper door 40 while the image forming unit 11 is performing the image forming, the CPU 121 stops the image forming by the image forming unit 11. According to the first embodiment, since an erroneous operation of the upper door 40 is reduced, such stoppages of image formation will also be reduced.

The lock releasing link 52 and the locking tab 522 are an example of a first latch member that can move between a locked position in which the upper door 40 is locked to the image forming unit 11 and an unlocked position in which the upper door 40 is not locked to the image forming unit 11. The lock member 54 is an example of a second latch member that locks against the locking tab 522 when the locking tab 522 is in the locked position, and the lock on the locking tab 522 is released when the locking tab 522 is in the unlocked position. The lock releasing button 51 releases the fixing by the fixing mechanism by moving the locking tab 522 from the locked position to the unlocked position.

The lock releasing button 51 and the lock releasing link 52 may form a link mechanism connected via a joint (the engagement pin 521 and the engagement hole 514). The lock spring 53 is an example of a biasing member that biases the lock releasing button 51 so that the locking tab 522 is positioned at the locked position. The operation member 513 of the lock releasing button 51 is pressed in opposition to the biasing force of the lock spring 53 to release the fixing by the lock member 54.

### Second Embodiment

In the first embodiment, the lock releasing button 51 of the upper door 40 is hidden by the leg 342, so that erroneous operation of the upper door 40 is suppressed. However, even in a case where the lock releasing button 51 is not present, the erroneous operation of the upper door 40 may be suppressed. Therefore, in the second embodiment, another example of the operation member to be operated when opening the upper door 40 is introduced. Note that the second embodiment may be combined with the first embodiment.

### 1. Another example of the operation member

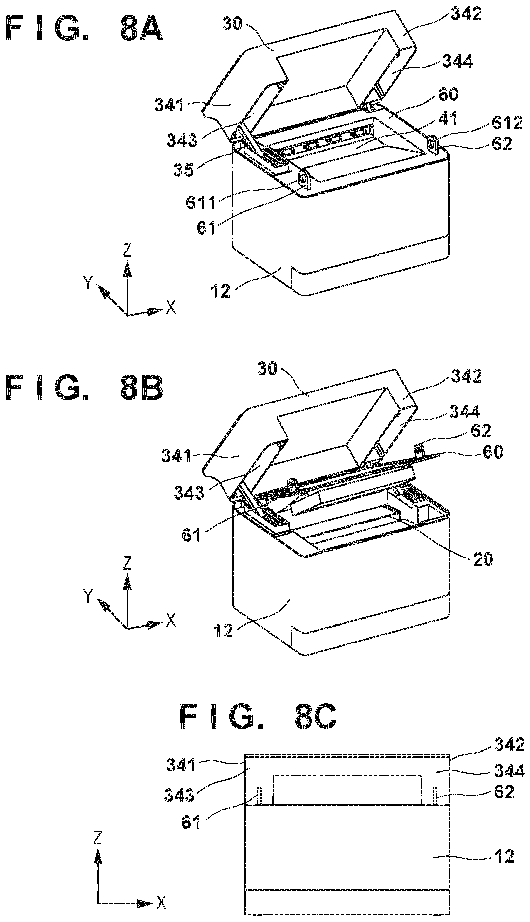

FIG. 8A illustrates a state in which the document reading unit 30 is open and an upper door 60 has been closed. FIG. 8B illustrates a state in which the document reading unit 30 and the upper door 60 have been opened. FIG. 8C illustrates a state in which the document reading unit 30 and the upper door 60 have been closed. In the second embodiment, an image forming unit 12 is used instead of the image forming unit 11. The image forming unit 12 lacks the lock mechanism of the upper door 40 of the image forming unit 11. The upper door 60 is used instead of the upper door 40. The upper door 60 lacks the lock mechanism of the upper door 40. Further, the upper door 60 includes an operation member 61 and an operation member 62. The operation member 61 and the operation member 62 are gripping members to be gripped by a user or are knobs to be pinched by a user.

As illustrated in FIG. 8A, the upper door 60 is in a first position in which the upper door 60 covers the upper portion of the image forming unit 12. The user puts his/her fingers in a finger hole 611 of the operation member 61 and a finger hole 612 of the operation member 62, respectively, and pulls the operation members 61 and 62 upward. As a result, the upper door 60 is positioned at the second position indicated by FIG. 7B. The second position is a position where the upper door 60 opens the upper portion of the image forming unit 12. When the upper door 60 is opened when the image forming unit 12 is performing image forming, the CPU 121 stops the image forming by the image forming unit 12. The user grabs the operation member 61 and the operation member 62 of the upper door 60 with their hands and pushes downward. As a result, the upper door 60 returns from the second position to the first position.

As illustrated in FIG. 8A, the leg 341 of the document reading unit 30 has an opening 343. The leg 342 has an opening 344. The opening 343 may be a groove or cavity provided in the leg 341. The opening 344 may be a groove or cavity provided in the leg 342.

As illustrated in FIG. 8C, the document reading unit 30 is closed, and the upper door 60 is closed. The document reading unit 30 is supported on the upper door 60 via the leg 341 and the leg 342. The operation member 61 of the upper door 60 is accommodated in a space inside the leg 341 through the opening 343. The operation member 62 is accommodated in a space inside the leg 342 through the opening 344. The operation member 61 is hidden by the leg 341. The operation member 62 is hidden by the leg 342.

### 2. Position of the openings for accommodating the operation members

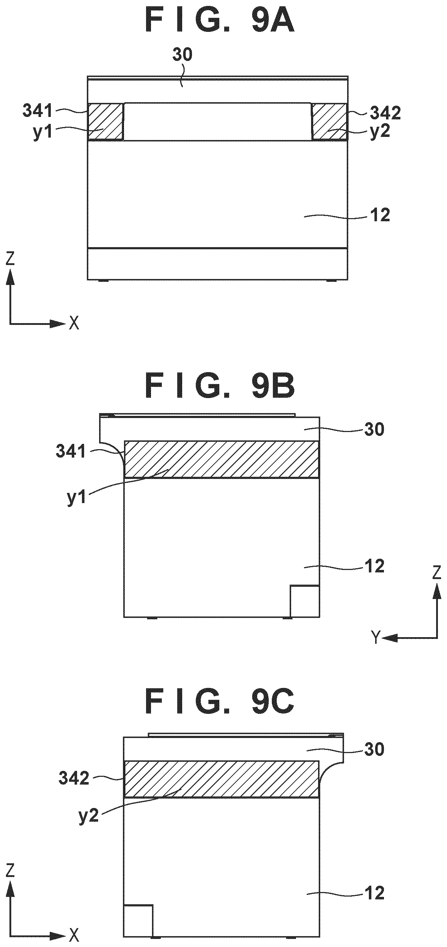

FIG. 9A is a front view of the image forming apparatus 101. FIG. 9B and FIG. 9C are side views of the image forming apparatus 101. In FIG. 9A, FIG. 9B, and FIG. 9C, the hatched region y1 is a region in which the operation member 61 can be arranged. The region y2 is a region in which the operation member 62 can be arranged. That is, the operation member 61 is accommodated in the region y1 of the leg 341 through the opening 343 when the document reading unit 30 is supported on the upper door 60. Similarly, the operation member 62 is accommodated in the region y2 of the leg 342 through the opening 344 when the document reading unit 30 is supported on the upper door 60.

In a state in which the document reading unit 30 is closed, the user cannot touch the operation member 61 and the operation member 62 of the upper door 60. Therefore, it is difficult for the user to open the upper door 60. This may make it difficult for the user to accidentally open or close the upper door 60. In addition, it is likely that it will become difficult for the image forming performed by the image forming unit 12 to be stopped inadvertently. The second embodiment can achieve the same effect using fewer components than the first embodiment. Therefore, the manufacturing cost of the image forming apparatus 101 can likely be reduced.

In the second embodiment, two operation members 61 and 62 are provided, but this is merely an example. As long as the operation members are accommodated in the regions y1 and y2 and can be hidden, the number of operation members may be one or three or more. However, when the two operation members 61 and 62 are arranged on the left and right sides of the upper door 60, the user may be able to stably open and close the upper door 60 by holding the upper door with both hands.

According to the second embodiment, the operation members 61 and 62 are an example of one or more knobs that a person can pinch and lift up with their fingers to cause the upper door 60 to rotate from the first position to the second position. There is a state in which the upper door 60 is in the first position and the upper door 60 is supporting the legs 341 and 342. In this state, one or more knobs (operation members 61 and 62) are arranged to be hidden by the legs 341 and 342. As a result, erroneous operation of the upper door 60 will be suppressed.

The legs 341 and 342 may have grooves or cavities (e.g., openings 343 and 344, regions y1 and y2) that accommodate the one or more knobs (operation members 61 and 62). Accordingly, it will likely become possible for the material for hiding the operation members 61 and 62 to be reduced.

The operation members 61 and 62 may have finger holes 611 and 612 into which a person's fingers are inserted. As a result, the user can likely easily pinch the operation members 61 and 62.

### Third Embodiment

In the third embodiment, marks indicating the positions of the operation members of the upper door are hidden while the document reading unit 30 is closed, thereby suppressing an erroneous operation of the upper door. The matters described in the first and second embodiments will not be re-described. Note that the third embodiment may be combined with the first embodiment or the second embodiment.

### 1. Overview of the operation members

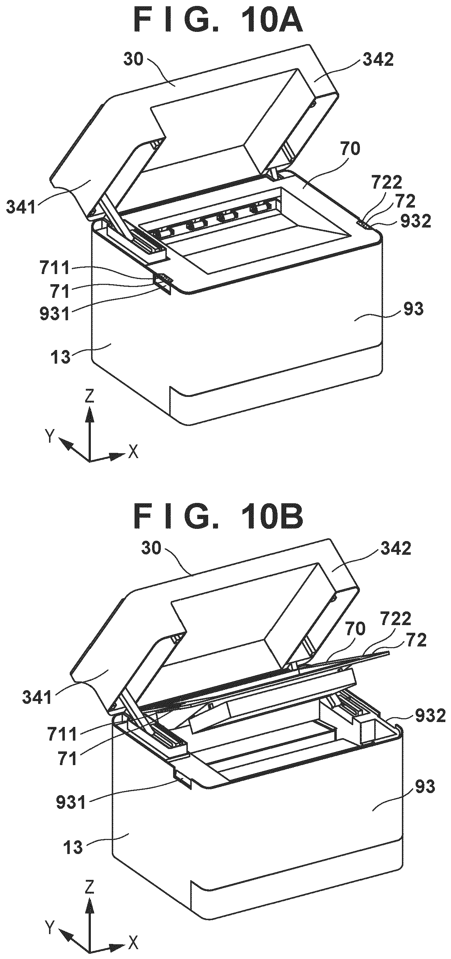

FIG. 10A illustrates a state in which an upper door 70 has been closed. FIG. 10B illustrates a state in which the upper door 70 has been opened. In the third embodiment, an image forming unit 13 has a similar structure to the image forming units 11 and 12 of the previously described embodiments. In the third embodiment, an upper door 70 has the same basic structure as the upper doors 40 and 60 of the previously described embodiments. In the following, the third embodiment will be described mainly in its differences as compared to the first and second embodiments.

As illustrated in FIG. 10A, the upper door 70 is in a first position in which the upper door 70 covers the upper portion of the image forming unit 13. The upper door 70 includes an operation member 71 and a mark 711. The operation member 71 is a component that a user hooks their finger onto when the user opens the upper door 70. The mark 711 visually indicates the position of the operation member 71. A groove 931 is provided on a left side surface of a housing 93 of the image forming unit 13. In a plan view, the groove 931 and the operation member 71 are arranged so that at least a part of the groove 931 and the operation member 71 overlap. Further, the operation member 71 is exposed on the left side surface of the image forming unit 13. When the user hooks their finger on the operation member 71 and pulls up the upper door 70 upward, the upper door 70 moves to the second position indicated by FIG. 10B. As a result, the upper portion of the image forming unit 13 is opened.

When the sensor 122 detects that the upper door 70 has been opened during image formation, the CPU 121 stops image formation by the image forming unit 13. When the user grabs the operation member 71 and pushes downward, the upper door 70 returns from the second position to the first position.

As illustrated in FIG. 10A, the upper door 70 may include an operation member 72 and a mark 722. The operation member 72 is a component that a user hooks their finger onto when the user opens the upper door 70. The mark 722 visually indicates the position of the operation member 72. A groove 932 is provided on a right side surface of the housing 93 of the image forming unit 13. In a plan view, the groove 932 and the operation member 72 are arranged so that at least a part of the groove 932 and the operation member 72 overlap. Further, the operation member 72 is exposed on the right side surface of the image forming unit 13. When the user hooks their finger on the operation member 72 and pulls up the upper door 70 upward, the upper door 70 moves to the second position indicated by FIG. 10B. As a result, the upper portion of the image forming unit 13 is opened.

### 2. Details of the operation member and the groove

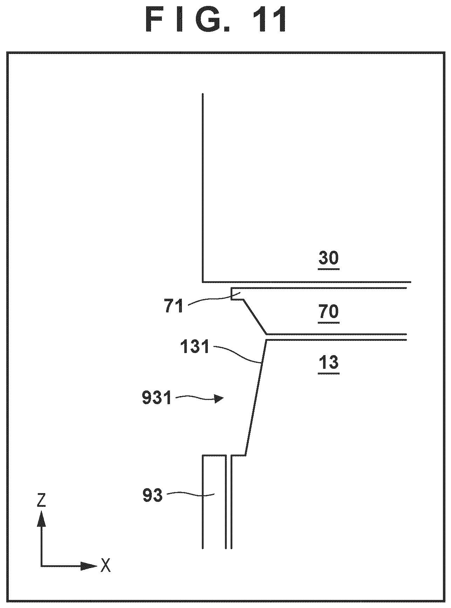

The operation member 71 and the operation member 72 have the same or similar structure. Therefore, the structure of the operation member 71 and its periphery will be described below with reference to an enlarged view of FIG. 11. FIG. 11 illustrates a structure in the periphery of the operation member 71 when the image forming unit 13 is viewed from the front.

The upper door 70 is in the first position. The operation member 71 is provided at a left end portion of the upper door 70. The groove 931 is provided at an upper portion of the housing 93 of the image forming unit 13. When the left side surface of the image forming unit 13 is viewed from the X direction, the operation member 71 of the upper door 70 is exposed through the groove 931. The groove 931 is recessed in the X direction so that the user can easily put their hand on a lower part or lower surface of the operation member 71 of the upper door 70. The groove 931 has a bottom surface 131 in the X direction. As described above, the groove 931 may be formed by an opening or a notch provided in the housing 93 and a recess provided in the structure of the image forming unit 13.

### 3. Regions in which the operation members are arranged

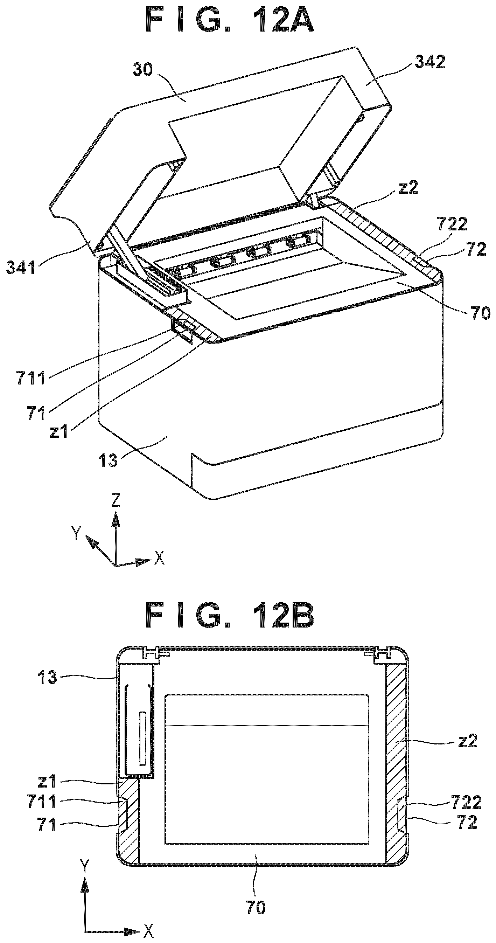

FIG. 12A illustrates a state in which the document reading unit 30 is opened and the upper door 70 has been closed. FIG. 12B illustrates a top surface of the upper door 70 in plan view. The mark 711 is provided on the upper surface of the upper door 70, and visually indicates the position of the operation member 71. The mark 711 is arranged, for example, in a hatched region z1 of the upper surface of the upper door 70. The mark 722 is provided on the upper surface of the upper door 70, and visually indicates the position of the operation member 72. The mark 722 is arranged, for example, in a hatched region z2 of the upper surface of the upper door 70.

The region z1 and the region z2 are regions hidden by the leg 341 and the leg 342 of the image forming unit 13, respectively, when the document reading unit 30 is closed. Further, the region z1 and the region z2 are arranged at the end portions of the upper door 70 in the X direction (the widthwise direction of the image forming unit 13), respectively. Furthermore, the region z1 is a region in which at least a part of the mark 711 overlaps the operation member 71 in the Y direction (the depth direction of the image forming unit 13). The region z2 is a region in which at least a part of the mark 722 overlaps the operation member 72 in the Y direction.

According to the third embodiment, the mark 711 and the mark 722 can indicate the positions of the operation member 71 and the operation member 72 of the upper door 70, respectively. In a state where the document reading unit 30 is closed, the user cannot visually recognize the mark 711 and the mark 722. As a result, erroneous operation of the upper door 70 will be suppressed.

The marks 711 and 722 may be visually distinguishable from the vicinity of the marks 711 and 722. For that purpose, the color of the marks 711 and 722 may be different from the color in their vicinity. The marks 711 and 722 may be affixed or may be printed with a coating. A surface property (texture or feel) of the marks 711 and 722 may be different from a surface property in their vicinity. The marks 711 and 722 may be laser-engraved or formed by a mold. Accordingly, the marks 711 and 722 may be formed at low cost.

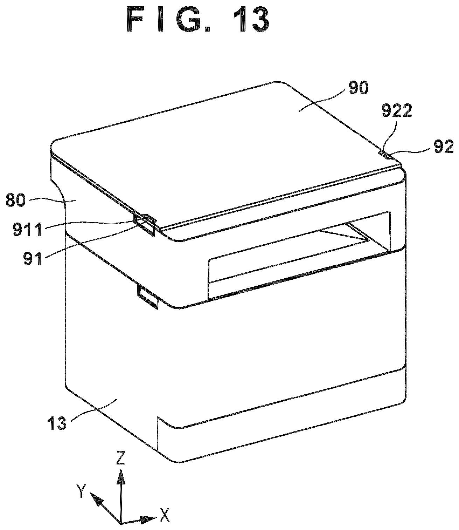

FIG. 13 illustrates a document reading unit 80 that replaces the document reading unit 30. The document reading unit 80 is different from the document reading unit 30 in that a pressing plate 90 provided with operation members 91 and 92 and marks 911 and 922 is adopted instead of the pressing plate 32. The operation members 91 and 92 are members that are handled by the user to open the pressing plate 90. The marks 911 and 922 visually indicate the positions of the operation members 91 and 92, respectively. The operation members 91 and 92 and their structures in the vicinity thereof may be identical or similar (e.g., of similar shape) to the operation members 71 and 72 and structures in the vicinity thereof. Similarly, the marks 911 and 922 and structures in the vicinity thereof may be the same or similar (e.g., of similar shape) to the marks 711 and 722.

As FIG. 13 suggests, the marks 911 and 922 and the marks 711 and 722 may partially overlap in plan view. That is, the X coordinate and the Y coordinate of the mark 911 may be substantially the same as the X coordinate and the Y coordinate of the mark 711. The X coordinate and the Y coordinate of the mark 922 may be substantially the same as the X coordinate and the Y coordinate of the mark 722. In a plan view, the operation members 91 and 92 and the operation members 71 and 72 may partially overlap. That is, the X coordinate and the Y coordinate of the operation member 91 may be substantially the same as the X coordinate and the Y coordinate of the operation member 71. The X coordinate and the Y coordinate of the operation member 92 may be substantially the same as the X coordinate and the Y coordinate of the operation member 72. The user may easily associate the positional relationship between the marks 711 and 722 and the operation members 71 and 72 from the positional relationship between the marks 911 and 922 and the operation members 91 and 92. This is because, when the user opens the document reading unit 80, the user can visually recognize the marks 711 and 722 and the operation members 71 and 72 provided on the upper door 70. Therefore, the user will be able to reliably find the operation members 71 and 72 of the upper door 70 when opening the document reading unit 80.

As described above, according to the third embodiment, the grooves 931 and 932 are provided at the edge of the upper surface of the housing 93 of the image forming unit 13. The grooves 931 and 932 may be openings having no bottom surface. The operation members 71 and 72 are provided at end portions of the upper door 70, and cover at least a portion of the grooves 931 and 932 in a plan view. Further, the operation members 71 and 72 are configured to be subjected to an upward force by human fingers inserted into the grooves 931 and 932 to lift the upper door 70 from the first position to the second position. The upper door 70, the image forming unit 13, or the document reading units 30 and 80 may have the marks 711 and 722 indicating the positions of the operation members. The user can identify the operation members 71 and 72 by relying on the marks 711 and 722. As a result, erroneous operation of the upper door 70 will likely be reduced.

In a state in which the upper door 70 is in the first position and the upper door 70 is supporting the legs 341 and 342, the legs 341 and 342 hide the marks in plan view. Accordingly, since the user cannot visually recognize the marks 711 and 722, erroneous operation of the upper door 70 will likely be suppressed.

In the depth direction (+X direction) of the groove 931, the operation member 71 may protrude outward from the bottom surface 131 of the groove 931. In the depth direction (-X direction) of the groove 932, the operation member 72 may protrude outward from the bottom surface of the groove 932. As illustrated in FIG. 11, the operation members 71 and 72 do not protrude from the side surfaces of the legs 341 and 342. Thus, both the operability of the operation members 71 and 72 and the suppression of erroneous operation may be achieved.

The marks 711 and 722 may have a different color than a color in the vicinity thereof. The marks 711 and 722 may have a different shape than a shape in the vicinity thereof. The marks 711 and 722 may have a different surface property than a surface property in the vicinity thereof. This will likely allow the user to visually or tactilely identify the marks 711 and 722.

The operation members 513, 61, 62, 71, and 72 may have a shape different from a shape in the vicinity thereof. The operation members 513, 61, 62, 71, and 72 may have a surface property different from a surface property in the vicinity thereof. As a result, the user can likely easily identify the operation members 513, 61, 62, 71, and 72. Note that the marks 711 and 722 may be integrated with the operation members 71 and 72.

### Other Embodiments

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU), or the like) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)TM), a flash memory device, a memory card, and the like.

Various embodiments have been described in detail above but it will be understood that the present disclosure is not limited to these embodiments and encompasses all modifications, variants, alternatives and equivalents falling within the scope of the appended claims.

## Claims

1. An image forming apparatus (101) comprising:
an image forming means (11) configured to form an image on a recording material;
a cover (40) that is movable between a first position in which the cover covers an upper portion of the image forming means and a second position in which the cover opens the upper portion of the image forming means;
a document reading means (30) that is provided above the image forming means and above the cover and that is moveable independently of the cover;
a leg (341;342) that is positioned above the cover and below the document reading means, and that is moveable together with the document reading means;
a first hinge (33) that rotatably supports the document reading means and the leg in relation to the image forming means; and
an operation member (513) configured to be operated when a person moves the cover from the first position to the second position,
wherein in a state in which the cover is in the first position and the cover is supporting the leg, the leg hides the operation member, and
in a state in which the cover is in the first position and the document reading means and the leg are rotated and the cover is not supporting the leg, the leg exposes the operation member.

2. The image forming apparatus according to claim 1, further comprising:
a fixing mechanism (52;54) configured to fix the cover to the image forming means; and
a release mechanism (51) configured to release the fixing by the fixing mechanism when the operation member is operated by a person,
wherein a position where the operation member is provided is a position at which the operation member is hidden by the leg in a state in which the cover is in the first position and the document reading means is supported by the cover via the leg, and
is a position at which the hiding of the operation member by the leg is cancelled when the cover is in the first position and the document reading means and the leg are rotated upward via the first hinge.

3. The image forming apparatus according to claim 2, further comprising a movement mechanism (55) configured to move the cover to a third position between the first position and the second position when the release mechanism releases the fixing of the cover to the image forming means by the fixing mechanism.

4. The image forming apparatus according to claim 3, wherein the movement mechanism includes a biasing means (56) for biasing the cover upward.

5. The image forming apparatus according to claim 4, wherein the biasing means includes an elastic body.

6. The image forming apparatus according to any one of claims 1 to 5, further comprising a second hinge (43) configured to rotatably support the cover in relation to the image forming means.

7. The image forming apparatus according to any one of claims 1 to 5, wherein an exposure light source (1) configured to irradiate light on a photosensitive drum to thereby form an electrostatic latent image on the photosensitive drum is fixed below the cover.

8. The image forming apparatus according to any one of claims 1 to 5, further comprising:
a detection means (122) for detecting that the cover is open; and
a control means (121) for controlling the image forming means, wherein
wherein the control means, when the detection means detects that the cover is open during execution of image formation by the image forming means, stops the image formation by the image forming means.

9. The image forming apparatus according to claim 2, wherein the fixing mechanism comprises
a first latch member (52; 522) that is moveable between a locked position at which the cover is locked to the image forming means and an unlocked position in which the cover is not locked to the image forming means; and
a second latch member (54) configured to lock to the first latch member when the first latch member is in the locked position, and for which the lock to the first latch member is released when the first latch member is in the unlocked position,
wherein the release mechanism is configured to release the fixing by the fixing mechanism by moving the first latch member from the locked position to the unlocked position.

10. The image forming apparatus according to claim 9, wherein a link mechanism by which the release mechanism and the first latch member are connected via a joint is formed.

11. The image forming apparatus according to claim 9, further comprising a biasing means (53) for biasing the release mechanism so as to position the first latch member in the locked position,
wherein the release mechanism releases the fixing by the fixing mechanism by the operation member being pressed in opposition to a biasing force of the biasing means.

12. The image forming apparatus according to any one of claims 1 to 5, wherein the cover comprises, as the operation member, one or more knobs (61; 62) that a person can pinch and lift up with their fingers in order to rotate the cover from the first position to the second position.

13. The image forming apparatus according to claim 12, wherein the one or more knobs are arranged so as to be hidden by the leg in a state in which the cover is in the first position and the cover is supporting the leg.

14. The image forming apparatus according to claim 13, wherein the leg comprises a groove or a cavity (343; 344) that accommodates the one or more knobs.

15. The image forming apparatus according to claim 12, wherein the one or more knobs comprise a finger hole (611; 612) into which a finger of a person can be inserted.

16. The image forming apparatus according to any one of claims 1 to 5, further comprising a groove (343; 344) provided at an edge of an upper surface of a housing of the image forming means,
wherein the operation member is provided at an end portion of the cover, covers at least a portion of the groove in a plan view, and is configured so as to receive an upward force by a finger of a person that is inserted through the groove to lift up the cover from the first position to the second position, and
the cover, the image forming means, or the document reading means comprise a mark (711) configured to indicate a position of the operation member.

17. The image forming apparatus according to claim 16, wherein in a state where the cover is in the first position and the cover is supporting the leg, the leg hides the mark in a plan view.

18. The image forming apparatus according to claim 16, wherein, in a depth direction of the groove, the operation member protrudes from a bottom surface of the groove, and the operation member does not protrude from a side surface of the leg.

19. The image forming apparatus according to claim 16, wherein the mark has a color that is different to a color of a vicinity thereof, has a shape that is different from a shape of a vicinity thereof, or has a surface property that is different from a surface property of a vicinity thereof.

20. The image forming apparatus according to any one of claims 1 to 5, wherein the operation member has a shape that is different from a shape of a vicinity thereof, or has a surface property that is different from a surface property of a vicinity thereof.

21. An image forming apparatus (101) comprising:
an image forming means (11) configured to form an image on a recording material;
a cover (40) that is movable between a first position in which the cover covers an upper portion of the image forming means and a second position in which the cover opens the upper portion of the image forming means;
a document reading means (30) that is provided above the image forming means and above the cover and that is moveable independently of the cover;
a leg (341; 342) that is positioned above the cover and below the document reading means, and that is moveable together with the document reading means;
a first hinge (33) that rotatably supports the document reading means and the leg in relation to the image forming means; and
a fixing mechanism configured to fix the cover to the image forming means (52;54); and
a release mechanism (51) having an operation member (513) to be operated by a person, and configured to release the fixing by the fixing mechanism when the operation member is operated,
wherein the operation member
is hidden by the leg in a state in which the cover is in the first position and the document reading means is supported by the cover via the leg, and
the hiding of the operation member by the leg is cancelled and the operation member is exposed when the cover is in the first position and the document reading means and the leg are rotated upward via the first hinge.

22. An image forming apparatus (101) comprising:
an image forming means (11) configured to form an image on a recording material;
a cover (40) that is movable between a first position in which the cover covers an upper portion of the image forming means and a second position in which the cover opens the upper portion of the image forming means;
a document reading means (30) that is provided above the image forming means and above the cover and that is moveable independently of the cover;
a leg (341; 342) that is positioned above the cover and below the document reading means, and that is moveable together with the document reading means;
a first hinge (33) that rotatably supports the document reading means and the leg in relation to the image forming means; and
an operation member (53) that a person can pinch and lift up with their fingers in order to rotate the cover from the first position to the second position,
wherein the operation member
is hidden by the leg in a state in which the cover is in the first position and the document reading means is supported by the cover via the leg, and
the hiding of the operation member by the leg is cancelled and the operation member is exposed when the cover is in the first position and the document reading means and the leg are rotated upward via the first hinge.

23. An image forming apparatus (101) comprising:
an image forming means (11) configured to form an image on a recording material;
a cover (40) that is movable between a first position in which the cover covers an upper portion of the image forming means and a second position in which the cover opens the upper portion of the image forming means;
a document reading means (30) that is provided above the image forming means and above the cover and that is moveable independently of the cover;
a leg (341; 342) that is positioned above the cover and below the document reading means, and that is moveable together with the document reading means;
a first hinge (33) that rotatably supports the document reading means and the leg in relation to the image forming means; and
a groove (343; 344) provided at an edge of an upper surface of a housing of the image forming means;
wherein the operation member (513) is provided at an end portion of the cover, covers at least a portion of the groove in a plan view, and is configured so as to receive an upward force by a finger of a person that is inserted through the groove to lift up the cover from the first position to the second position; and
the cover, the image forming means, or the document reading means comprise a mark (741) configured to indicate a position of the operation member,
wherein at least one of the operation member and the mark
is hidden by the leg in a state in which the cover is in the first position and the document reading means is supported by the cover via the leg, and
the hiding of the operation member by the leg is cancelled and the operation member is exposed when the cover is in the first position and the document reading means and the leg are rotated upward via the first hinge.
